Europäisches Patentamt

European Patent Office

Office européen des brevets

(11) Veröffentlichungsnummer: **0 266 782**

**A1**

(12) **EUROPÄISCHE PATENTANMELDUNG**

(21) Anmeldenummer: **87116354.9**

(22) Anmeldetag: **05.11.87**

(51) Int. Cl.⁴: **C12C 7/16**

(30) Priorität: **07.11.86 DE 8629841 U**

(43) Veröffentlichungstag der Anmeldung:
**11.05.88 Patentblatt 88/19**

(84) Benannte Vertragsstaaten:
**BE CH DE FR GB LI NL**

(71) Anmelder: **Anton Steinecker Maschinenfabrik GmbH**
**Münchenerstrasse 18**
**D-8050 Freising(DE)**

(72) Erfinder: **Herberg, Hans Jakob**
**Forellenstrasse 34**
**D-8052 Moosburg(DE)**
Erfinder: **Berger, Baldur**
**Sonnenstrasse 21**
**D-8053 Attenkirchen(DE)**

(74) Vertreter: **Patentanwälte Grünecker,**
**Kinkeldey, Stockmair & Partner**
**Maximilianstrasse 58**
**D-8000 München 22(DE)**

(54) **Läuterbottich.**

(57) Die Erfindung betrifft einen Läuterbottich (1) zur Würzeerzeugung bei der Bierherstellung. Um bei einem solchen Läuterbottich ein einfaches und vollständiges Austrebern der Treber zu ermöglichen, ist der Läuterbottich so ausgestaltet, daß in einem Treberscheitbalken (8) einzelne, zur Balkenlängsachse schräggestellte Treberscheite (11)-(12a)(12b)(13)(14) befestigt sind, die so angestellt sind, daß sie bei einer Drehbewegung des Tragarmes die Treber zwischen sich hindurch radial nach außen fördern. Am radial äußeren Ende des Treberscheitbalkens ist ein geschlossener Schieber (15) ausgebildet.

FIG.1

EP 0 266 782 A1

## Läuterbottich

Die Neuerung betrifft einen Läuterbottich zur Würzeerzeugung bei der Bierherstellung, mit einer Aufhackvorrichtung, die einen Tragarm aufweist, der heb-und senkbar um eine Zentralwelle des Läuterbottichs antreibbar ist und an dem Messer zum Aufhacken der Treber angeordnet sind, und mit einem Treberscheitbalken, der am Tragarm angelenkt ist und aus einer abgesenkten Arbeitsstellung in eine angehobene Ruhestellung schwenkbar ist, wobei der Treberscheitbalken in der Ruhestellung von einem in einen Bolzen am Tragarm einrastenden Rastelement gehalten wird.

Läuterbottiche dieser Art sind bekannt und werden zur Würzeerzeugung bei der Bierherstellung eingesetzt. Sie dienen dabei dem Zweck, Feststoffe aus der Maische auszuscheiden, die in den Läuterbottich eingefüllt wird. Die Feststoffe (Treber) lagern sich am Boden des Läuterbottichs ab. Im Läuterbottich ist eine Aufhackvorrichtung angeordnet, die einen Tragarm aufweist, der sich von einer Zentralwelle waagerecht bis etwa an die Seitenwände des Läuterbottichs erstreckt. An diesem Tragarm sind Messer befestigt, die dazu dienen, den abgesetzten Treberkuchen aufzulockern, so daß möglichst viele Bereiche des Trebers zur Würzegewinnung ausgelaugt werden können.

Nach Beendigung der Abläuterung wird die Treber mechanisch ausgetragen. Hierzu ist es bekannt, Treberscheitbalken zu verwenden. Die Treberscheitbalken sind gegenüber dem Tragarm, der die Messer trägt, auf-und abschwenkbar, so daß sie in einer abgesenkten Arbeitsstellung bis auf den Boden des Läuterbottichs reichen können. Durch Drehen der Zentralwelle streifen diese Treberbalken über den Boden und schieben den Treber vor sich her bis zu im Boden vorgesehenen Auslauföffnungen, durch die die Treber dann aus dem Läuterbottich herausfällt.

Die Öffnungen sind dabei im äußeren Bereich des Bodens angeordnet, so daß die innenliegenden Treber bei der Drehbewegung des Treberscheitbalkens nach außen bewegt werden müssen. Um dies zu erreichen, wurden im Stand der Technik durchgehende (von der Zentralwelle bis zum Umfangsbereich des Läuterbottichs) Treberscheite verwendet, die etwa S-förmig zwischen Zentralwelle und Seitenwand des Läuterbottichs verlaufen. Treberscheite dieser Art sind unter dem Namen "Meyer-Ulm" bekannt.

Nachteilig an diesen bekannten Aufhackvorrichtungen mit Treberscheiten der beschriebenen Art ist es aber, daß sich damit häufig keine vollständige Ausförderung der Treber erreichen läßt, und daß außerdem die Herstellung aufgrund der besonderen Verlaufsform aufwendig ist.

Der Neuerung liegt die Aufgabe zugrunde, einen Läuterbottich der eingangs genannten Art so weiterzubilden, daß ein einfaches und vollständiges Austrebern der Treber möglich ist.

Gelöst wird diese Aufgabe bei einem Läuterbottich der eingangs genannten Art dadurch, daß am Treberscheitbalken einzelne, zur Balkenlängsachse schräggestellte Treberscheite befestigt sind, die so angestellt sind, daß sie bei Drehbewegung des Tragarmes die Treber zwischen sich hindurch radial nach außen fördern und daß am radial äußeren Ende des Treberscheitbalkens ein geschlossener Schieber ausgebildet ist. Bei einem mit diesen Merkmalen versehenen Läuterbottich werden die Treber zwischen den - schräg angestellten Schieberplatten bei der Drehung des Treberscheitbalkens hindurch auf einem radial weiter außenliegende Bahn gefördert wobei die schräge Anstellung der einzelnen Treberscheite bewirkt, daß alle im Wirkungsbereich dieser Treberscheite auftreffenden Treber weiter nach außen gefördert werden. Durch mehrmalige Umdrehung des Treberscheitbalkens werden die Treber dadurch zuverlässig vom Zentrum bis zu den Seitenwänden radial bewegt, bis sie schließlich von dem am radial äußeren Ende des Treberscheitbalkens angeordneten geschlossenen Schieber erfaßt und über ein Treberloch geschoben werden. Die Treber fallen dann durch dieses Treberloch und können dann geeignet weitergeleitet werden.

Die Ausbildung einzelner Treberscheite, die - schräg angestellt am Treberscheitbalken so angeordnet sind, daß sie zwischen sich Kanäle bilden, ist sehr einfach möglich. Es genügen Treberscheite der einfachsten Form, die in jeweils geeigneten Winkeln mit dem Treberscheitbalken befestigt werden, beispielsweise durch Schweißen. Es hat sich dabei als Vorteilhaft erwiesen, wenn der Anstellwinkel der Treberscheite zur Balkenlängsachse in einem Winkelbereich von 20 bis 50° liegt. In diesem Winkelbereich ist sichergestellt, daß die Treberscheite die Treber einerseits nicht nur vor sich herschieben, andererseits aber auch so weit erfassen, daß sie die Treber um ein geeignetes Maß radial nach außen fördern. Als besonders günstig hat sich ein Anstellwinkel von 30° herausgestellt. Dieser Anstellwinkel kann für alle Treberscheite derselbe sein.

In einer weiteren Ausgestaltung der Neuerung ist vorgesehen, daß am Treberscheitbalken auf der zur Zentralwelle weisenden Seite ein Führungsscheit angeordnet ist, welches am Sockel der Zentralwelle beginnt und so angestellt ist, daß seine Oberfläche etwa tangential zum Sockel verläugt.

An diesem am weitesten innen im Zentrum des Läuterbottichs wirkenden Führungsscheit werden die Treber zuverlässig erfaßt und in den ersten, radial am weitesten innenliegenden Kanal zwischen zwei Treberscheiten geschoben.

Zu diesem Zweck geht das Führungsscheit an seinem balkenseitigen Ende in derart angestellte Scheitelemente über, daß der Verlauf von Führungsscheit und den beiden Scheitelementen angenähert einer Spirale mit Ursprung in der Zentralwellenachse entspricht. Durch diese angenäherte Spiralform des Verlaufs des Führungsscheits und der Scheitelemente in diesem innenliegenden Bereich werden die Treber in diesem Bereich in etwa überall bei der Drehung des Treberscheitbalkens mit derselben Radialkraft beaufschlagt. In einer weiteren vorteilhaften Ausgestaltung der Neuerung ist vorgesehen, daß sich die Wirkungsbereiche der aneinander angrenzenden Treberscheite überlappen. Diese Maßnahme stellt sicher, daß die aufeinanderfolgenden Treberscheite vollständig die in dem vorangegangenen Umlauf auf die zugeordnete Treberscheitbahn bewegte Treber vollständig erfaßt und auf eine radial weiter außenliegende Bahn legt.

Eine weitere Ausgestaltung der Neuerung sieht vor, daß der Treberscheitbalken über ein Gelenkhebelsystem an dem Tragbalken derart angelenkt ist, daß er beim Hochfahren des Tragbalkens in seine gegenüber dem Tragbalken angehobene Ruhestellung bewegt wird. Mit diesem Merkmal ist zum Anheben des Treberscheitbalkens dann, wenn er nicht benötigt wird, keine gesonderte Hubvorrichtung erforderlich. Vielmehr wird der Treberscheitbalken über ein geeignet aufgebautes Gelenkhebelsystem zwangsläufig angehoben, wenn der Tragarm angehoben wird.

Zum Halten des Treberscheitbalkens ist der hierzu vorgesehene Bolzen an einem Klinkhebel und das Rastelement als Sperrklinke ausgebildet, wobei die Sperrklinke mit einem Sperrklinkenhalter am Treberscheitbalken befestigt ist. Am Sperrklinkenhalter ist eine Freiklinke schwenkbar befestigt, die beim Ausklinkvorgang den Bolzen aus der Sperrklinke führt. Mit diesen Merkmalen wird beim Anheben des Tragarms der Treberscheitbalken so lange über das Gelenksystem angehoben, bis die Sperrklinke mit dem Bolzen in Eingriff kommt. Beim Erreichen dieser Ruhestellung kann der Tragarm dann abgesenkt werden, so daß allein mit den Aufhackmessern gearbeitet wird. Die Treberscheite sind aufgrund ihrer angehobenen Position dabei unwirksam. Wenn dagegen der Tragarm aus dieser oberen Stellung, in der der Treberscheitbalken einklinkt, noch weiter nach oben gefahren wird, wird der Bolzen über die Freiklinke bewegt. Beim anschließenden Absenken des Tragarmes wird der Bolzen dann mit Hilfe der Freiklinke um die Sperrklinke herumgeführt, so daß dann der Treberscheitbalken wieder in seine Arbeitsstellung geschwenkt werden kann.

Die Neuerung wird im folgenden anhand eines in der Zeichnung dargestellten Ausführungsbeispiels weiter erläutert und beschrieben.

Figur 1 zeigt eine schematische Teildarstellung eines Läuterbottichs mit Aufhackvorrichtung in Seitenansicht,

Figur 2 zeigt eine Draufsicht im Pfeilrichtung II der Figur 1 auf die Aufhackvorrichtung,

Figur 3 zeigt die Einklinkvorrichtung zum Festhalten des Treberscheitbalkens am Tragarm,

Figuren 4a bis 4d zeigen den Klinkenmechanismus in verschiedenen Stellungen beim Aus- bzw. Einklinken.

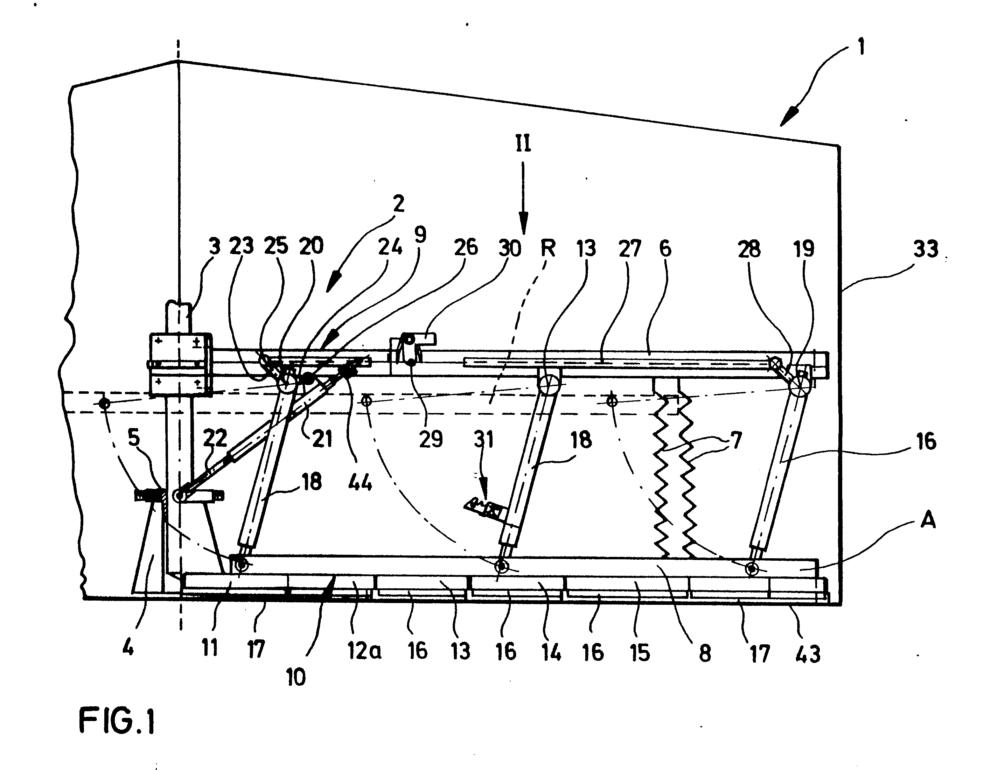

In Figur 1 der Läuterbottich insgesamt mit 1 bezeichnet und zur Hälfte schematisch dargestellt. Der Läuterbottich besitzt die Form eines Kreiszylinders, der oben und unten abgeschlossen ist. Die Anschlüsse zum Einlaß der Maische, zum Auslaß der Würze und andere übliche Zuführleitungen sind nicht dargestellt.

In dem Läuterbottich 1 befindet sich eine im Ganzen mit 2 bezeichnete Aufhackvorrichtung. Diese Aufhackvorrichtung ist um eine Zentralwelle 3 mit Hilfe eines nicht dargestellten Motors antreibbar, so daß sie im Inneren des Läuterbottichs um die Welle 3 umlaufen kann. Die Welle 3 wird über die Wellenführung 5 in einem Sockel 4 drehbar gehalten und abgestützt.

Die Aufhackvorrichtung 2 umfaßt einen sich horizontal bis zu der Seitenwand 33 erstreckenden Tragarm, an dem über die gesamte Länge Aufhackmesser 7 befestigt sind, von denen der Übersichtlichkeit halber nur zwei in Figur 1 dargestellt sind. Diese Messer hacken beim Abläutern die sich am Boden 43 des Läuterbottichs 1 absetzenden Treberstoffe auf.

Mit dem Tragarm 6 ist über Schwenklager 19 und Gelenkarme 18 ein Treberscheitbalken 8 befestigt, der aufgrund dieser Befestigung zusammen mit dem Tragarm 6 im Läuterbottich 1 umläuft. Der Treberscheitbalken 8 kann von der in Figur 1 gestrichelt dargestellten oberen Ruhelage R in die durchgezogen gezeichnete Arbeitsstellung A geschwenkt werden. In der Arbeitsstellung A streifen die am Treberscheitbalken 8 angebrachten Treberscheite 10 über den Boden 43 des Läuterbottichs 1 und fördern in noch näher zu erläuternder Weise die abgelagerten Treber radial nach außen in Richtung zur Seitenwand 33. In diesem äußeren Bereich befinden sich im Boden 43 Treberlöcher 32, durch die dann die Treber ausgeschoben werden.

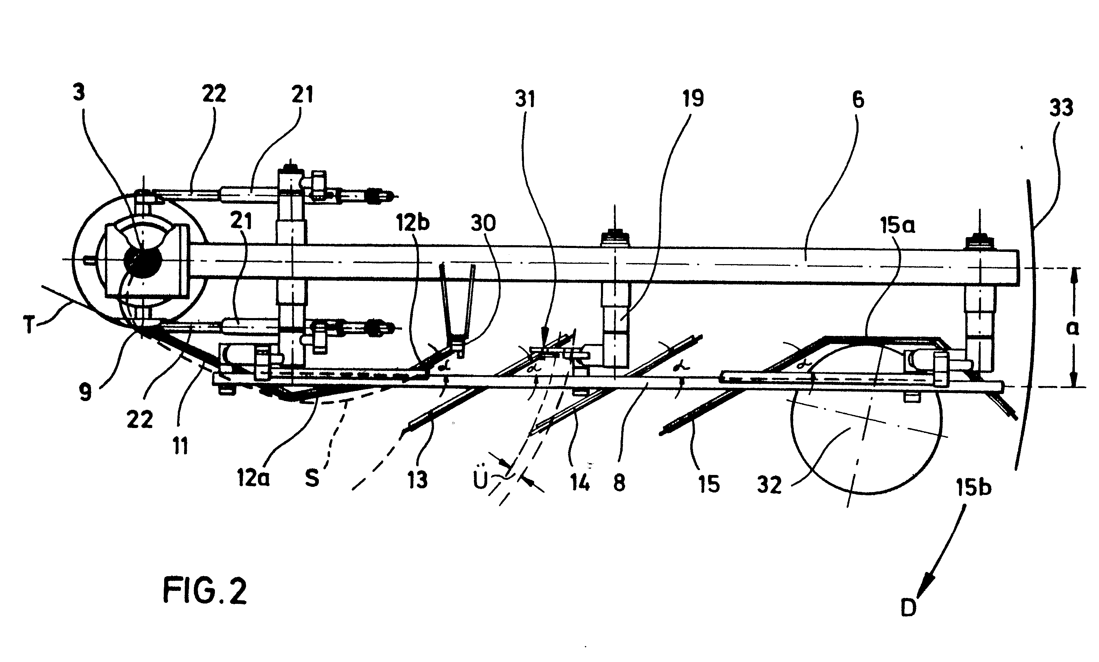

Zum Auf-und Abschwenken des Treberscheitbalkens 8 gegenüber dem Tragarm 6 dient ein Gelenkhebelsystem, welches im Ganzen mit 9 bezeichnet ist. Dieses Gelenkhebelsystem 9 umfaßt zwei Zugstangen 22 (vgl. Figur 2), die einseitig am Sockel 4 angelenkt sind. Diese Zugstangen tragen eine Hülse 21, die über die Zugstange 22 frei beweglich ist. Die Bewegung wird zum nicht-angelenkten Ende der Zugstange 22 durch einstellbare Schrauben 44 begrenzt. Mit der Hülse 21 ist ein kürzerer Hebel 24 gelenkig verbunden, der am Schwenklager des radial innersten Gelenkarms 18 angreift. An diesem Schwenklager 20 ist ein weiterer längerer Hebel 23 befestigt, der über ein Schwenkgelenk 25 mit der Übertragungsstange 27 verbunden ist. Die Übertragungsstange 27 ist gelenkig über einen Hebel 28 mit dem Schwenklager 19 des radial äußeren Gelenkarms 18 verbunden. Der mittlere Gelenkarm 18 ist um sein Schwenklager 19 frei schwenkbar.

Beim Hochfahren des Tragarmes 6 mit Hilfe der Zentralwelle 3 aus der in Figur 1 durchgezogen gezeichneten Stellung kommt zunächst die Hülse 21 zur Anlage an den Schrauben 44. Dadurch wird über das Gelenk 26 und den kürzeren Gelenkhebel 24 ein Drehmoment um das Schwenklager 20 erzeugt, welches über den längeren Hebel 23 und die Übertragungsstange 27 auch den radial äußeren Gelenkarm 18 übertragen wird. Beim weiteren Anheben des Tragarmes 6 werden die Gelenkarme 18 daher parallelogrammartig gegenüber dem Tragarm 6 verschwenkt, so daß der Treberscheitbalken 8 in die obere Ruhestellung R bewegt wird. Diese Ruhestellung gibt lediglich die Relativposition des Treberscheitbalkens 8 gegenüber dem Tragarm 6 in der Zeichnung wieder. Wenn diese Stellung eingenommen ist, befinden sich sowohl der Tragarm 6 als auch der Treberscheitbalken 8 insgesamt weiter oben als dies in Figur 1 gezeigt ist.

Zur Arretierung des Treberscheitbalkens 8 dient ein Rastelement 31, welches am mittleren Gelenkarm 18 befestigt ist und in einen am Tragarm 6 als Teil eines Klinkhebels 30 ausgebildeten Bolzen 29 einrastet.

Der Aus-und Einrastvorgang wird weiter unten noch im Detail beschrieben werden.

Somit kann also der Treberscheitbalken 8 wahlweise in seine angehobene Ruhestellung R oder aber in seine Arbeitslage A gebracht werden. Diese Art der Anhebung des Treberscheitbalkens 8 durch Parallelverschiebung gegenüber dem Tragarm 6 macht es erforderlich, den Treberscheitbalken so anzuordnen, daß er beim Hochschwenken mit seinem zentralwellenseitigen Ende an der Zentralwelle 3 vorbei schwenkbar ist. Wie Figur 2 zeigt, ist der Treberscheitbalken 8 daher um einen geeigneten Abstand a gegenüber dem Tragarm 6 in Drehrichtung D voreilend befestigt.

Am Treberscheitbalken 8 sind die einzelnen Treberscheite 11, 12a, 12b, 13, 14 und der geschlossene Schieber 15, der ebenfalls aus einzelnen Treberscheitsegmenten besteht, befestigt. Das am weitesten innen wirkende Treberscheit 11 ist so ausgerichtet, daß seine Oberfläche entlang einer Tangente T an dem Sockel 4 verläuft. Dabei sitzt dieses Führungsscheit 11 am Sockel im Punkt P auf und streift somit auch die Treber, die sich an der Sockelwand ablagern, zuverlässig ab. Dieses Führungsscheit geht dann in zwei Scheitelemente 12a und 12b über, die bezüglich der Längsachse des Treberscheitbalkens 8 unterschiedlich angestellt sind. Das Führungselement 11 und die beiden Scheitelemente 12a und 12b sind dabei so angestellt, daß ihr Verlauf in etwa ein Spirale S annähert, deren Ursprung im Zentrum der Welle 3 sitzt. Auf diese Weise werden auf die Treber in diesem Bereich bei der Drehbewegung in etwa die gleichen Radialkräfte über die Verlaufsbreite dieser Elemente ausgeübt, d.h., es wird dadurch sichergestellt, daß an jeder Stelle ein zuverlässiges Nachaußenfördern der Treber stattfindet. Die Scheitelemente 12a und 12b bilden mit einem folgenden Scheit 13 einen ersten Kanal, durch den die Treber dann hindurch gefördert werden. Das Treberscheit 13 ist ebenso wie das Scheitelement 12b und die beiden weiter folgenden Scheite 14 und 15 in einem Winkel α zum Treberscheitbalken 8 angestellt. Der Winkel α beträgt im gezeigten Ausführungsbeispiel 30°. Die Länge und der Abstand zwischen den einzelnen Treberscheiten 13, 14 und 15 ist so bemessen, daß sich die von den Treberscheiten jeweils überstrichenen Bahnen einander etwas überlappen. Dies ist für die Treberscheite 13 und 14 in der Figur 2 dargestellt. Dabei sind die Radiusbahnen der aufeinander zuweisenden Enden der Treberscheite 13 und 14 jeweils eingezeichnet, wobei der Überlappungsbereich Ü zu erkennen ist. Dies stellt sicher, daß das jeweils nach außen folgende Treberscheit vollständig die vom jeweils innenliegenden Treberscheit nach außen geförderten Treber vollständig erfaßt und weiter nach außen bewegt.

Die aufgrund dieser Konstruktion verwendbaren Treberscheite sind einfachster Bauart und können einfach am Trägerscheitbalken 8 angeschweißt werden. Die Treberscheite können beispielsweise aus Kupfer oder auch Eisenplattenelementen bestehen, wobei am unteren Ende jedes Treberscheites ein Flacheisen 16 als Halter für eine Verschleißleiste 17 angeordnet sein kann. Dadurch läßt sich die Verschleißleiste nach Aufbruch auswechseln.

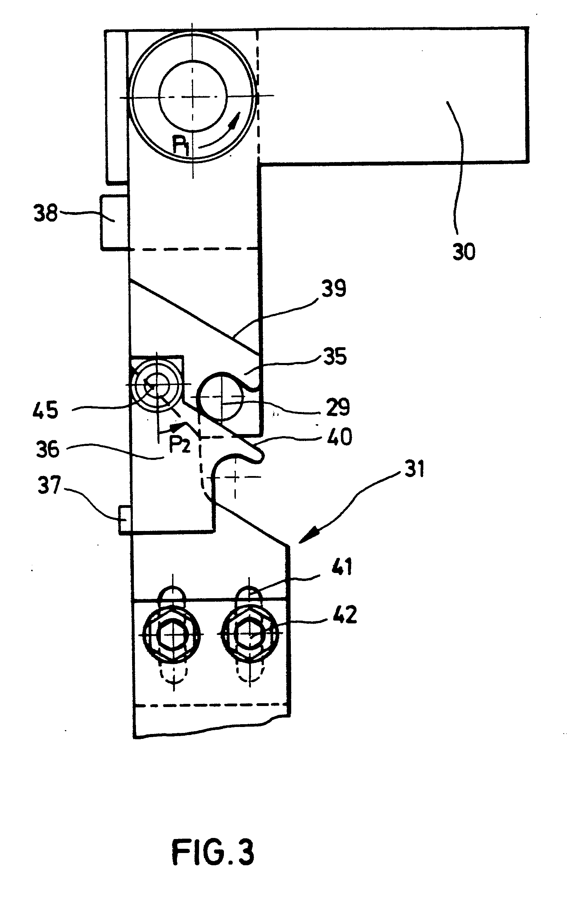

Am radial äußeren Ende geht das Treberscheit 15 in weitere Scheitelemente 15a und 15b über, die einen geschlossenen Schieber bilden, dessen Wände so angestellt sind, daß die einlaufenden Treberstoffe über Treberlöcher 32 gefördert werden, die sich im äußeren Umfangsbereich am Boden 43 befinden. Durch die gezeigte schräge Anstellung der Treberscheite wird einmal die Konstruktion für die Austragung der Treber einfach, zum anderen wird aber auch eine zuverlässige Arbeitsweise sichergestellt. Es hat sich gezeigt, daß sich mit derartigen schräg angestellten Treberscheiten eine vollständige und zuverlässige Austragung der Treberstoffe erreichen läßt. Wenn die Austragung der Treber beendet ist, wird der Treberscheitbalken 8 in seine in Figur 1 gezeigte Ruheposition über das Gelenksystem 9 geschwenkt. Gehalten wird der Treberscheitbalken 8 dabei von einem Klinkenmechanismus, der im folgenden anhand von Figur 3 weiter erläutert wird. Dieser Klinkenmechanismus umfaßt einen am Tragarm 6 befestigten Klinkhebel 30, der um eine Schwenkachse 34 an einem Halter schwenkbar ist. Der Anschlag begrenzt die Schwenkbewegung des Klinkhebels 30 in der in Pfeilrichtung $P_1$ entgegengesetzten Richtung. Der Klinkhebel 30 kann also in der in Figur 3 gezeigten Lage nur in Pfeilrichtung $P_1$ schwenken.

Am Treberscheitarm 8, genauer am mittleren Gelenkarm 18, ist ein Rastelement 31 befestigt, das mit dem Bolzen 29 des Klinkhebels 30 zusammen arbeitet. Dieses Rastelement 31 weist eine obere Sperrklinke 35 mit einer oberen Gleitfläche 39 auf. An der Sperrklinke 35 ist eine Freiklinke 36 um das Lager 45 frei schwenkbar gelagert. Auch hier wird der Schwenkweg entgegen der Pfeilrichtung $P_2$ durch einen Anschlag 37 begrenzt, so daß die Freiklinke 36 in der in Figur 3 gezeigten Lage nur nach rechts, d.h. in Pfeilrichtung $P_2$ schwenken kann.

Die Sperrklinke und die Freiklinke sind über Langlöcher 41 und entsprechende Schrauben 42 einstellbar gehalten.

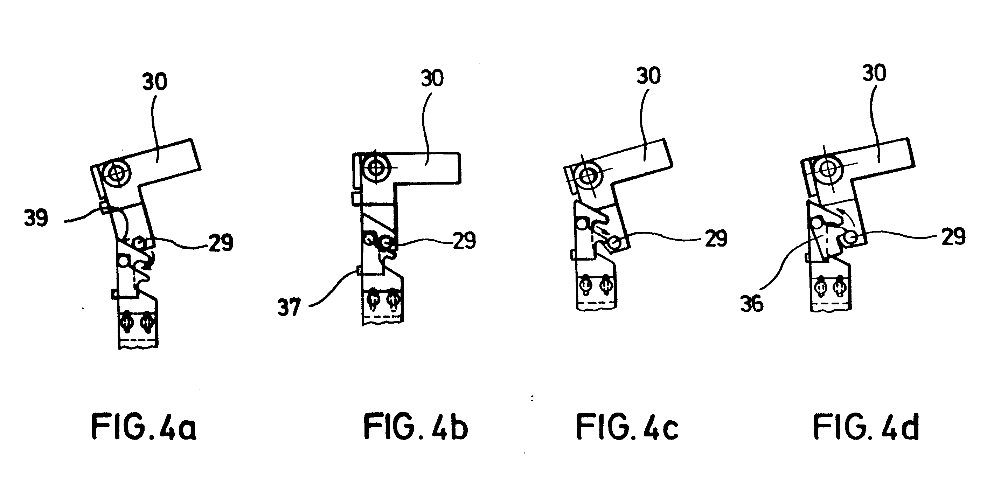

Die Funktionsweise dieses Klinkenmechanismus ist in den Figuren 4a bis 4d zu erkennen. Figur 4a erläutert den Vorgang beim Einrasten des Treberscheitbalkens 8 beim Hochfahren des Tragarmes 6. wie bereits erwähnt, verringert sich beim Hochfahren der Abstand zwischen dem Tragarm 6 und dem Treberscheitbalken 8 aufgrund der Wirkung des Gelenkhebelsystems 9, wobei beim Hochfahren eine Position erreicht wird, in der die Aufgleitfläche 39 der Sperrklinke 35 mit dem Bolzen 29 in Berührung kommt. Der Bolzen 29 gleitet an der Aufgleitfläche 39 dann entlang und wird aufgrund des Eigengewichts des Klinkhebels 30 - nach Erreichen der in Figur 4b gezeigten Position hinter die Sperrklinke 35 bewegt. Der Treberscheitbalken ist somit einrastend am Tragarm 8 befestigt. Wenn nun ein Aufhackvorgang stattfinden soll, kann der Tragarm 8 wieder so weit nach unten bewegt werden, daß die Hackmesser 7 arbeiten. Während der Arbeit der Hackmesser verbleibt der Treberscheitbalken 8 aufgrund der eingerasteten Lage in seiner oberen Ruhestellung. Wenn dann mit dem Austrebern begonnen werden soll, wird der Tragarm 6 wieder angehoben und zwar in eine Position, die höher liegt als zum Einrasten gemäß Figur 4b erforderlich ist. Beim weiteren Anheben verringert sich der Abstand zwischen Treberscheitbalken 8 und Tragarm 6 noch weiter, so daß der Bolzen 29 dann gemäß Figur 4c auf die Gleitfläche 40 der Freiklinke 36 aufläuft. Dadurch wird der Klinkhebel 30 in die in Figur 4c gezeigte Lage verschwenkt, so daß der Bolzen 29 um die Freiklinke 40 herumläuft. Das Eigengewicht des Klinkhebels 30 drückt den Bolzen dann hinter die Nase der Freiklinke 40. Wenn nun der Tragarm 6 abgesenkt wird, drückt der Bolzen 29 die Freiklinke 36 in die in Figur 4d gezeigte verschwenkte Position. In dieser Position wird die Sperrklinke 35 überbrückt, so daß der Bolzen 29 beim Absenken um die Sperrklinke 35 herum geführt wird. Dadurch wird der Treberscheitbalken 8 ausgeklinkt und kann nun in die in Figur 1 gezeigte Lage abgesenkt werden. In dieser Lage verlaufen die Gelenkarme 18 nicht ganz vertikal. Das bedeutet, daß der Treberscheitbalken mit seinem Eigengewicht auf dem Boden aufsitzt und daher zuverlässig ohne angehoben zu werden zum Austrebern auf der Bodenoberfläche entlang streicht.

Es ist klar, daß die Neuerung nicht auf das dargestellter Ausführungsbeispiel beschränkt ist. So kann auch mit mehreren schräg gestellten Treberscheiten gearbeitet werden als das in den Figuren gezeigt ist. Des weiteren kann die Aufhackvorrichtung mehrere der hier gezeigten Arme aufweisen, beispielsweise zwei um 180° zueinander versetzt wirkende Arme.

## Ansprüche

1. Läuterbottich zur Würzeerzeugung bei der Bierherstellung mit einer Aufhackvorrichtung, die einen Tragarm aufweist, der heb-und senkbar um eine Zentralwelle des Läuterbottichs antreibbat ist und an dem Messer zum Aufhacken des Trebers angeordnet sind, und mit einem Treberscheitbalken, der am Tragarm angelenkt ist und aus einer abgesenkten Arbeitsstellung in eine angehobene Ruhestellung schwenkbar ist, wobei der Treberscheitbalken in der Ruhestellung von einem in einen Bolzen am Tragarm einrastenden Rastelement gehalten wird, dadurch **gekennzeichnet**,

daß am Treberscheitbalken (8) einzelne, zur Balkenlängsachse schräg gestellte (α) Treberscheite (11, 12a, 12b, 13, 14, 15) befestigt sind, die so angestellt sind, daß sie bei einer Drehbewegung (D) des Tragarmes (6) die Treber zwischen sich hindurch radial nach außen fördern und das am radial äußeren Ende des Treberscheitbalkens (8) ein geschlossener Schieber (15a, 15b) ausgebildet ist.

2. Läuterbottich nach Anspruch 1,
dadurch **gekennzeichnet**,
daß der Anstellwinkel (α) der Treberscheite (12b, 13, 14, 15) zur Balkenlängsachse 20 bis 50° beträgt.

3. Läuterbottich nach Anspruch 2,
dadurch **gekennzeichnet**,
daß der Anstellwinkel (α) 30° beträgt.

4. Läuterbottich nach wenigstens einem der vorangegangenen Ansprüche,
dadurch **gekennzeichnet**,
daß am Treberscheitbalken (8) auf der zur Zentralwelle (3) weisenden Seite ein Führungscheit (11) angeordnet ist, welches am Sockel (4) der Zentralwelle (3) beginnt und so angestellt ist, daß seine Oberfläche etwa tangential (T) zum Sockel (4) verläuft.

5. Läuterbottich nach Anspruch 4,
dadurch **gekennzeichnet**,
daß das Führungsscheit (11) an seinem balkenseitigen Ende in derart angestellte Scheitelemente (12a, 12b) übergeht, daß der Verlauf von Führungsscheit (11) und den beiden Scheitelementen (12a, 12b) angenähert einer Spirale (S) mit Ursprung in der Zentralwellenachse entspricht.

6. Läuterbottich nach wenigstens einem der vorangegangenen Ansprüche,
dadurch **gekennzeichnet**,
daß sich die Wirkungsbereiche aneinander angrenzender Treberscheite (12b, 13; 13, 14; 14, 15) überlappen (Ü).

7. Läuterbottich nach wenigstens einem der vorangegangenen Ansprüche,
dadurch **gekennzeichnet**,
daß die Treberscheite (11, 12a, 12b, 13, 14, 15, 15a, 15b) an ihrer Unterseite ein Flacheisen (16) und eine Verschleißleiste (17) aufweisen.

8. Läuterbottich nach wenigstens einem der vorangegangenen Ansprüche,
dadurch **gekennzeichnet**,
daß der Treberscheitbalken (8) über ein Gelenkhebelsystem (9) an dem Tragbalken (6) angelenkt ist, daß er beim Hochfahren des Tragbalkens (6) in seine gegenüber dem Tragbalken (6) angehobene Ruhestellung (R) parallel verschoben wird.

9. Läuterbottich nach wenigstens einem der vorangegangenen Ansprüche,
dadurch **gekennzeichnet**,
daß der zum Halten des Treberscheitbalkens (8) vorgesehene Bolzen (29) an einem Klinkhebel (30) ausgebildet ist und daß als Rastelement (31) eine Sperrklinke (35) vorgesehen ist, die mit einem Sperrklinkenhalter mit dem Treberscheitbalken (8) verbunden ist.

10. Läuterbottich nach Anspruch 9,
dadurch **gekennzeichnet**,
daß am Sperrklinkenhalter eine Freiklinke (36) - schwenkbar befestigt ist, die beim Ausklinkvorgang den Bolzen aus der Sperrklinke (35) führt.

FIG.1

FIG.2

**FIG.3**

FIG. 4a    FIG. 4b    FIG. 4c    FIG. 4d

0 266 782

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-B-1 187 576 (C. LENZ) <br> * Ansprüche 1,2; Abbildung * <br> --- | 1,2,6,8 | C 12 C 7/16 |
| Y | DE-C- 58 176 (BURCKHARDT & ZIESLER) <br> * Anspruch; Seite 1, Zeilen 20-41; Abbildung 2 * <br> --- | 1,2,6,8 | |
| A | DE-B-1 075 522 (C. LENZ) <br> * Anspruch 1; Spalte 2, Zeilen 42-49; Abbildung 2 * <br> --- | 1,2 | |
| A | DE-B-1 011 833 (A. ZIEMANN) <br> ----- | | |

RECHERCHIERTE SACHGEBIETE (Int. Cl.4)

C 12 C

Der vorliegende Recherchenbericht wurde für alle Patentansprüche erstellt

| Recherchenort | Abschlußdatum der Recherche | Prüfer |
|---|---|---|
| DEN HAAG | 15-01-1988 | WIESER, M.R.J. |

EPO FORM 1503 03.82 (P0403)